(19) Europäisches Patentamt
European Patent Office
Office européen des brevets

(11) **EP 1 179 251 B1**

(12) **EUROPÄISCHE PATENTSCHRIFT**

(45) Veröffentlichungstag und Bekanntmachung des Hinweises auf die Patenterteilung:
**04.04.2007   Patentblatt 2007/14**

(51) Int Cl.:
***H04L 25/02*** *(2006.01)*

(21) Anmeldenummer: **00936670.9**

(22) Anmeldetag: **04.05.2000**

(86) Internationale Anmeldenummer:
**PCT/DE2000/001399**

(87) Internationale Veröffentlichungsnummer:
**WO 2000/069133 (16.11.2000 Gazette 2000/46)**

(54) **VERFAHREN UND VORRICHTUNG ZUR SCHÄTZUNG VON GEDÄCHTNISBEHAFTETEN ÜBERTRAGUNGSKÄNALEN**

METHOD AND DEVICE FOR ESTIMATING TRANSMISSION CHANNELS WITH MEMORY

PROCEDE ET DISPOSITIF D'ESTIMATION DE VOIES DE TRANSMISSION DOUEES DE MEMOIRE

(84) Benannte Vertragsstaaten:
**DE FI FR GB IT SE**

(30) Priorität: **06.05.1999   DE 19920819**

(43) Veröffentlichungstag der Anmeldung:
**13.02.2002   Patentblatt 2002/07**

(73) Patentinhaber: **ROBERT BOSCH GMBH**
**70442 Stuttgart (DE)**

(72) Erfinder: **KOWALEWSKI, Frank**
**D-38228 Salzgitter (DE)**

(56) Entgegenhaltungen:
**WO-A-96/13910          WO-A-98/40977**
**WO-A-98/44655          DE-A- 4 329 317**

- **STEINER B ET AL: "LOW COST CHANNEL ESTIMATION IN THE UPLINK RECEIVER OF CDMA MOBILE RADIO SYSTEMS AUFWANDSGUESTIGE KANALSCHAETZUNG IN DER AUFWAERTSSTRECKE VON CDMA-MOBILFUNKSYSTEMEN" FREQUENZ,DE, SCHIELE UND SCHON GMBH. BERLIN, Bd. 47, Nr. 11/12, 1. November 1993 (1993-11-01), Seiten 292-298, XP000426381 ISSN: 0016-1136**

**Beschreibung**

Die Erfindung betrifft ein Verfahren und eine Vorrichtung zur Schätzung von gedächtnisbehafteten Übertragungskanälen, wie sie beispielsweise bei zeitdiskreten Kommunikationssystemen, wie CDMA-Systemen (CDMA = Code Division Multiple Access), verwendet werden.

Bei der Übertragung von Daten über gedächtnisbehaftete Kanäle werden zeitlich getrennte Datenteile überlagert. Die resultierende Inter-Symbol-Interferenz der Daten läßt sich eliminieren, wenn die Pulsantwort des Übertragungskanals bekannt ist. Zur Bestimmung der Impulsantwort dienen sogenannte Kanalschätzer. Sie nutzen Informationen über das gesendete Signal oder die Form dieses Signals aus, um aus dem Empfangssignal Kanalkoeffizienten abzuleiten. Die verbreitetsten Kanalschätzer basieren auf einem "matched filter" zu einem vollständig bekannten Referenzsignal $r$ mit optimalen Autokorrelationseigenschaften, d.h. $r*r \propto \delta$, wie dies beispielsweise aus K.D. Kammeyer: "Nachrichtenübertragung", 2. Aufl., Reihe Informationstechnik, Teubner, Stuttgart, 1996, hervorgeht. Nicht optimale Autokorrelationseigenschaften lassen sich linear korrigieren, allerdings führt additives Rauschen des zu schätzenden Übertragungskanals, wie dies beispielsweise bei CDMA-Systemen (CDMA = Code Division Multiple Access) inhärent ist, im allgemeinen zu Koeffizientenschätzungen, die über den tatsächlichen Werten liegen. Bekannt ist, diese ungenauen Koeffizientenschätzungen teilweise durch nichtlineare Nachbearbeitung zu korrigieren. So ist beispielsweise aus der Druckschrift Z. Kostic, M. I. Sezan und E. L. Titlebaum: "Estimation of the Parameters of a Multipath Channel Using Set_Theoretic Deconvolution", IEEE Trans. Comm., Bd. 40 (1992,1006 - 1011, ein derartiges Verfahren bekannt, das unter dem Begriff POCS-Verfahren oder POCS-Algorithmus"POCS = Projection Onto Convex Sets) geläufig ist. Ferner ist in diesem Zusammenhang noch auf den bekannten MMSE-Algorithmus (MMSE = Minimum Mean Square Error) zu verweisen, der beispielsweise in der oben erwähnten Monographie K. D. Kammeyer "Nachrichtenübertragung"  beschrieben ist.

Aus der WO-A-98 44655 ist ein Verfahren zum Schätzen eines Übertragungkanals bekannt, wobei eine erste Schätzung der Impulsantwort bestimmt wird. Es werden dort spezielle Inter-Symbol-Interferenzen für die Schätzung berücksichtigt, die Störungen verursachen. Diese Symbol-Interferenzen sind nicht durch gedächtnisbehaftete Übertragungskanäle verursacht.

Nachteilig bei den heute bekannten Korrekturen von additiven Störungen bei der Schätzung von gedächtnisbehafteten Übertragungskanälen ist jedoch, dass die Verfahren für verschieden starke Störungen verschieden gute Korrekturergebnisse liefern. Ferner korrigieren Schwellenwertoperationen Koeffizientenwerte in der Nähe des Schwellenwertes diskontinuierlich, was zu unnötig schlechten Korrekturen führt.

Der Erfindung liegt daher die Aufgabe zugrunde, ein Verfahren und eine Vorrichtung zur Schätzung von gedächtnisbehafteten Übertragungskanälen zu schaffen, die eine bessere Schätzung der Kanäle liefert, wobei die Schätzgüte möglichst wenig von den additiven Störungen des Übertragungskanals abhängen soll.

Diese Aufgabe wird durch das Verfahren mit den Merkmalen des Anspruchs 1 sowie die Vorrichtung mit den Merkmalen des Anspruchs 12 gelöst. Bevorzugte Ausgestaltungen der Erfindung sind Gegenstand der Unteransprüche. Die Erfindung betrifft eine Verfahren zum Schätzen gedächtnisbehafteter Übertragungskanäle, das die folgenden Schritte aufweist:

(a) Bestimmen einer ersten Schätzung $\hat{h}$ des Übertragungskanals,
(b) Schätzung der additiven Störungen des Übertragungskanals; und
(c) Korrektur der ersten Kanalschätzung des Schritts (a) unter Berücksichtigung der Schätzung der additiven Störungen des Schritts (b).

Vorzugsweise wird bei dem erfindungsgemäßen Verfahren die erste Kanalschätzung $\hat{h}$ des Schritts (a) durch einen "matched filter" oder eine Least-Squares-Schätzung durchgeführt.

Weiterhin umfaßt die erfindungsgemäße Vorrichtung einen Kanalschätzer und einen Schätzer der additiven Störungen, mit denen das Empfangssignal beaufschlagt wurde, und weist weiter eine Kanalschätzungskorrektur auf, die das Signal des Kanalschätzers unter Bezugnahme des Ausgangssignals des Schätzers der additiven Störungen korrigiert.

Vorteilhafterweise liefert das Verfahren bessere Schätzungen als andere Verfahren. Die Schätzungen sind relativ unabhängig von der Stärke additiver Störungen. Kleine Kanalkoeffizienten werden genauer als bei üblichen Schwellwertkorrekturen geschätzt. Dadurch können auch nicht-Nyquist-Impuls-geformte Signale durch die Verwendung des neuen Verfahrens besser entzerrt werden.

Bevorzugte Ausführungsformen der Erfindung werden nachfolgend anhand der Zeichnungen näher beschrieben.

Fig. 1 zeigt ein Blockschema der erfindungsgemäßen Vorrichtung zur Schätzung von gedächtnisbehafteten Übertragungskanälen, und

Fig. 2 zeigt die Struktur eines Kanalschätzers.

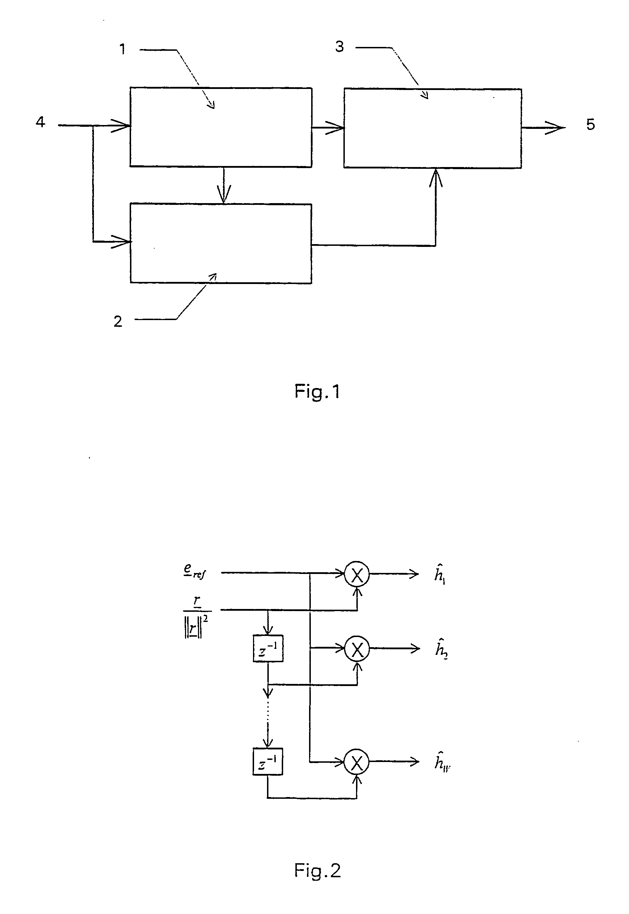

Fig. 1 zeigt einen Kanalschätzer 1 sowie einen parallelen dazu angeordneten Störungsschätzer 2, die beide mit einem Empfangssignal 4 beaufschlagt werden, und einen Kanalschätzungskorrigierer 3, der das Signal des Kanalschätzers 1 unter Zuhilfenahme des Ausgangssignales des Störungsschätzers 2 korrigiert und die Kanalschätzung 5 ausgibt.

Zur näheren Erläuterung der Wirkungsweise der erfindungsgemäßen Vorrichtung sei ein zeitdiskretes Kommunikationssystem gegeben, das zur Kanalschätzung ein Referenzsignal $\underline{r} = (r_1,..., r_L)$ versendet. Optional kann gleichzeitig ein Datensignal $\underline{s} = (s_1,...,s_L)$ gesendet werden, dessen Kreuzkorrelation mit dem Referenzsignal $\underline{r}$ verschwindet. Dieser Fall entspricht CDMA-Systemen, die gleichzeitig Referenz- und Dateninformationen mit orthogonalen CDMA-Codes übertragen. Die Leistung $P_s$ des Datensignales $\underline{s}$ sei das f-fache der Leistung $P_r$ des Referenzsignals $\underline{r}$, also $P_s = f \cdot P_r$. Dabei entspricht der Zustand f = 0 Systemen, die Referenz- und Datensignale zeitlich getrennt versenden. Das Sendesignal werde über einen statischen Mehrwegekanal mit der Impulsantwort $\underline{h} = (h_1,...,h_W)$, wobei W die Anzahl der Chips ist, und additivem Gaußschen Rauschen $\underline{n}$ übertragen, so daß sich das folgende Empfangssignal ergibt:

$$\underline{e} = (\underline{r} + \underline{s}) * \underline{h} + \underline{n} .$$

Dann ist N = L - W + 1 die Länge des Empfangssignalteils $\underline{e}_{ref} = (e_{refstart},..., e_{restart+N-1})$, der nicht durch vor oder nach dem Referenzsignal gesendete Daten beeinflußt wird. Weiterhin sei $E = \|\underline{e}_{ref}\|^2$ die gesamte empfangene Energie des Empfangssignals, das durch das Referenzsignal beeinflußt wurde. Entsprechend der Vorrichtung werden die Kanalkoeffizienten $h_k$, k ∈ {1, ..., W} der Impulsantwort $\underline{h}$ zunächst durch das dem Empfangssignal $\underline{r}$ entsprechende "matched filter" $\underline{r}^*_{-k}$ geschätzt zu $\underline{\hat{h}}$ :

$$\underline{\hat{h}} = \frac{1}{\gamma} \cdot G^{*T} \cdot \underline{e}_{\text{ref}} ,$$

wobei gilt:

$$G = \begin{pmatrix} r_W & r_{W-1} & \cdots & r_1 \\ r_{W+1} & r_W & & r_2 \\ \cdot & \cdot & & \cdot \\ r_{W+N-1} & r_{W+N-2} & \cdots & r_N \end{pmatrix}$$

sowie

$$\gamma = \frac{N}{L} \cdot \|\underline{r}\|^2 .$$

Die Struktur dieses Schätzers ist in Fig. 2 dargestellt.

Anschließend wird die Stärke $\sigma^2$ der additiven Störungen mit der folgenden Gleichung geschätzt zu:

$$\sigma^2 \;=\; \theta \;\; (E-(1+f) \;\cdot\; \gamma \;\cdot\; \left\|\hat{\underline{h}}\right\|^2 \;) \;\; / \;\; (N-(1+f))$$

Dabei wurde die folgende Definition getroffen:

$$\theta(x) \;=\; \begin{cases} x, falls\, x > 0 \\ 0, sonst \end{cases}$$

Anschließend werden die geschätzten Kanalkoeffizienten $\hat{h}_k$, k $\in$ {1,..., W}, der geschätzten Impulsantwort $\hat{\underline{h}}$ mit der folgenden Formel korrigiert:

$$\hat{h}'_k \;=\; \sqrt{\theta\,(\,\hat{h}_k^2 - \sigma^2\!\big/\gamma\,)} \;\cdot\; \hat{h}_k\Big/\left|\hat{h}_k\right| \quad,$$

falls $\hat{h}_k \neq 0$, und
$\hat{h}'_k = 0$ sonst.
Fig. 2 zeigt das Rechenschema des oben beschriebenen Kanalschätzers mit einer "matched filter"-Struktur. Da das Schema im vorangegangenen bereits erläutert wurde und Fig. 2 in wesentlichen selbsterklärend ist, kann die Beschreibung der Fig. 2 unterbleiben.

**Patentansprüche**

1.  Verfahren zum Schätzen eines gedächtnisbehafteten Übertragungskanals, **dadurch gekennzeichnet, dass** das Verfahren die folgenden Schritte aufweist:

    (a) Bestimmen einer ersten Schätzung $\hat{h}$ der Impulsantwort des Übertragungskanals;
    (b) Schätzung der Störungen, die durch additives Rauschen des Übertragungskanals verursacht sind; und
    (c) Korrektur der ersten Kanalschätzung des Schrittes (a) unter Berücksichtigung der Schätzung der Störungen des Schritts (b), die durch additives Rauschen des Übertragungskanals verursacht sind.

2.  Verfahren nach Anspruch 1, **dadurch gekennzeichnet, dass** die erste Kanalschätzung $\hat{\underline{h}}$ des Schritts (a) durch einen "matched filter" durchgeführt wird.

3.  Verfahren nach Anspruch 2, **dadurch gekennzeichnet, dass** der "matched filter" gegeben ist durch:

$$\hat{\underline{h}} = 1/\gamma \cdot \mathbf{G}^{\bullet \mathbf{T}} \cdot \mathbf{e_{ref}} \;,$$

    wobei gilt:

$$G \cong \begin{bmatrix} r_w & r_{w-1} & r_1 \\ r_{w+1} & r_w & r_2 \\ r_{w+N-1} & r_{w+N-2} & r_N \end{bmatrix} ,$$

sowie

$$\gamma = N/L \circ \|\underline{r}\|^2 ,$$

wobei
$\underline{r} = (r_1, ..., r_L)$ ein zur Kanalschätzung verwendetes Referenzsignal und

$$\underline{e}_{ref} = (e_{refstart}, ... e_{refstart + N-1})$$

der Empfangssignalteil ist, der nicht durch die vor und nach dem Referenzsignal gesendeten Daten beeinflusst wird, wobei

T den Transpositionsoperator,
N eine natürliche Zahl für die Länge des Empfangssignals und
L eine natürliche Zahl für die Länge des Chiptaktes angibt.

**4.** Verfahren nach Anspruch 1, **dadurch gekennzeichnet, dass** die erste Kanalschätzung des Schritts (a) durch eine Least-Square-Schätzung gegeben ist.

**5.** Verfahren nach Anspruch 4, **dadurch gekennzeichnet, dass** die Least-Square-Schätzung gegeben ist durch:

$$\hat{\underline{h}} = (G^{\bullet T} - G)^{-1} \circ G^{\bullet T} \circ \underline{e}^{ref}$$

**6.** Verfahren nach einem der vorangegangenen Ansprüche, **dadurch gekennzeichnet, dass** die Störungsschätzung in Schritt (b) gegeben ist durch

$$\sigma^2 = \theta (E - (1 + f) \circ \gamma \|\hat{\underline{h}}\|^2) / (N - (1 + f))$$

mit

$$\theta(x) = \begin{cases} x, \text{ falls } x > 0 \\ 0, \text{ sonst} , \end{cases}$$

wobei

N eine natürliche Zahl für die Länge des Empfangssignals,
f die Frequenz
$\gamma$ in Energienormierungsfaktor und
E die Energie ist.

**7.** Verfahren nach einem der vorangegangenen Ansprüchen, **dadurch gekennzeichnet, dass** die Kanalschätzungs-korrektur $\hat{\underline{h}}_k$ der $k$-ten Komponente,

$$ k \; \in \; \{1, ..., W\}, $$

des Schätzvektors $\hat{\underline{h}}$ der Kanalimpulsantwort $\underline{h}$ des Schritts (c) gegeben ist durch

$$ \hat{\underline{h}}_k = \begin{cases} 0, \text{ falls } \hat{h}_k{}^2 < \sigma^2/\gamma \\ \\ h_k \text{ sonst} \end{cases} $$

wobei $\sigma^2$ die Varianz und $\gamma$ einen Energienormierungsfaktor angibt.

**8.** Verfahren nach einem der Ansprüche 1 bis 6, **dadurch gekennzeichnet, dass** die Kanalschätzungskorrektur $\hat{\underline{h}}'_k$ der $k$-ten Komponente,

$$ k \; \in \; \{1, ..., W\}, $$

des Schätzvektors $\hat{\underline{h}}$ der Kanalimpulsantwort h des Schritts (c) gegeben ist durch

$$ \hat{\underline{h}}_k = \sqrt{\theta\left(\hat{\underline{h}}_k - \sigma^2/\gamma\right)} \cdot \hat{\underline{h}}_k / |\hat{\underline{h}}_k| $$

falls $\hat{\underline{h}}_k \neq 0$,
und $\hat{\underline{h}}_k = 0$, sonst
wobei $\sigma^2$ die Varianz, $\gamma$ je einen Energienormierungsfaktor und

$$ \theta(x) = \begin{cases} x, \text{ falls } x > 0 \\ \\ 0, \text{ sonst} \end{cases} $$

angibt.

**9.** Verfahren nach einem der Ansprüche 1 bis 6, **dadurch gekennzeichnet, dass** die Kanalschätzungskorrektur aus Schritt (c) durch den POCS-Algorithmus gegeben ist.

**10.** Verfahren nach einem der Ansprüche 1 bis 6, **dadurch gekennzeichnet, dass** die Kanalschätzungskorrektur des Schritts (c) durch den MMSE-Algorithmus gegeben ist.

**11.** Verfahren nach Anspruch 10, **dadurch gekennzeichnet, dass** der MMSE-Algorithmus gegeben ist durch

$$\hat{\underline{h}} = (G^{\bullet T} \circ G + \sigma^2 \circ I)^{-1} \circ G^{\bullet T} \circ \underline{e}_{ref}$$

wobei I die Einheitsmatrix,

$$G = \begin{bmatrix} r_W & r_{W-1} & r_1 \\ r_{W+1} & r_W & r_2 \\ r_{W+N+1} & r_{W+N-2} & r_N \end{bmatrix},$$

$\sigma^2$ die Varianz
und $\underline{e}_{ref} = (e_{refstart}, \dots e_{refstart+N-1})$ der Empfangssignalanteil ist, der nicht durch die vor und nach dem Referenzsignal gesendeten Daten beeinflusst wird.

**12.** Vorrichtung zur Durchführung des Verfahrens nach einem der vorangegangenen Ansprüche, **dadurch gekennzeichnet, dass** die Vorrichtung einen Kanalschätzer (1) und einen Schätzer für die Störungen (2), die durch additives Rauschen des Übertragungskanals verursacht werden, umfasst, mit denen das Empfangssignal beaufschlagt ist, und weiter einen Kanalschätzungskorrigierer (3) aufweist, der so ausgelegt ist, dass er das Signal des Kanalschätzers (1) unter Bezugnahme des Ausgangssignals des Schätzers der durch das additive Rauschen des Übertragungskanals verursachten Störungen (2) korrigiert.

**Claims**

**1.** Method for estimation of a transmission channel with a memory, **characterized in that** the method has the following steps:

(a) determination of a first estimate $\hat{\underline{h}}$ of the impulse response of the transmission channel;
(b) estimation of the interference which is caused by additive noise on the transmission channel, and
(c) correction of the first channel estimate from step (a) taking into account the estimate of the interference from step (b) which is caused by additive noise on the transmission channel.

**2.** Method according to Claim 1, **characterized in that** the first channel estimate $\hat{\underline{h}}$ in step (a) is carried out by a matched filter.

**3.** Method according to Claim 2, **characterized in that** the matched filter is provided by:

$$\hat{\underline{h}} = 1/\gamma \circ G^{\bullet T} \circ e_{ref},$$

where:

$$G = \begin{pmatrix} r_W & r_{W-1} & \cdot & r_1 \\ r_{W+1} & r_W & & r_2 \\ r_{W+N-1} & r_{W+N-2} & & r_N \end{pmatrix} .$$

and

$$\gamma = N/L \cdot \|\underline{r}\|^2 ,$$

where

$$\underline{r} = (r_1, \ldots, r_L)$$

is a reference signal which is used for channel estimation, and

$$\underline{e}_{ref} = (e_{refstart}, \ldots e_{refstart + N-1})$$

is the received signal element which is not influenced by the data transmitted before and after the reference signal, where
T indicates the transposition operator,
N indicates a natural number for the length of the received signal, and
L indicates a natural number for the length of the chip clock cycle.

4. Method according to Claim 1, **characterized in that** the first channel estimate in step (a) is provided by means of a least-squares estimate.

5. Method according to Claim 4, **characterized in that** the least-squares estimate is provided by:

$$\underline{\hat{h}} = (G^{*T} \cdot G)^{-1} \cdot G^{*T} \cdot \underline{e}^{ref}$$

6. Method according to one of the preceding claims, **characterized in that** the interference estimate in step (b) is provided by:

$$\hat{\sigma}^2 = \theta \, (E - (1 + f) \cdot \gamma \, \|\underline{\hat{h}}\|^2) / (N - (1 + f))$$

where

$$\theta(x) = \begin{cases} x, \text{ if } x > 0 \\ \\ 0, \text{ else,} \end{cases}$$

where
N is a natural number for the length of the received signal,
f is the frequency
$\gamma$ is an energy normalization factor, and
E is the energy.

7. Method according to one of the preceding claims, **characterized in that** the channel estimation correction $\hat{\underline{h}}_k$ for the k-th component,

$$k \in \{1, \dots, W\},$$

of the estimation vector $\hat{\underline{h}}$ for the channel impulse response $\underline{h}$ in step (c) is provided by:

$$\hat{\underline{h}}_k = \begin{cases} 0, \text{ if } \hat{h}_k^2 < \sigma^2/\gamma \\ \\ h_k \text{ else} \end{cases}$$

where $\sigma^2$ indicates the variance and $\gamma$ indicates an energy normalization factor.

8. Method according to one of Claims 1 to 6, **characterized in that** the channel estimation correction $\hat{\underline{h}}'_k$ for the k-th component,

$$k \in \{1, \dots, W\},$$

of the estimation vector $\hat{\underline{h}}$ of the channel impulse response h in step (c) is provided by

$$\hat{\underline{h}}_k = \sqrt{\theta(\hat{\underline{h}}_k - \sigma^2/\gamma)} \cdot \hat{\underline{h}}_k / |\hat{\underline{h}}_k| \,,$$

if $\hat{\underline{h}}_k \neq 0$, and $\hat{\underline{h}}_k = 0$, else
where $\sigma^2$ indicates the variance, $\gamma$ in each case indicates an energy normalization factor, and

$$\theta(x) = \begin{cases} x, \text{ if } x > 0 \\ \\ 0, \text{ else} \end{cases}$$

9. Method according to one of Claims 1 to 6, **characterized in that** the channel estimation correction from step (c) is provided by the POCS algorithm.

10. Method according to one of Claims 1 to 6, **characterized in that** the channel estimation correction in step (c) is provided by the MMSE algorithm.

11. Method according to Claim 10, **characterized in that** the MMSE algorithm is provided by

$$\hat{\underline{h}} = (G^{*T} \cdot G + \sigma^2 \cdot I)^{-1} \cdot G^{*T} \cdot \underline{e}_{ref}$$

where I is the unit matrix,

$$G = \begin{bmatrix} r_w & r_{w-1} & r_1 \\ r_{w+1} & r_w & r_2 \\ r_{w+N+1} & r_{w+N-2} & r_N \end{bmatrix},$$

$\sigma^2$ is the variance

and $\underline{e}_{ref} = (e_{refstart}, \cdots e_{refstart+N-1})$ is the received signal element which is not influenced by the data transmitted before and after the reference signal.

12. Apparatus for carrying out the method according to one of the preceding claims, **characterized in that** the apparatus has a channel estimator (1) and an estimator for the interference (2) which is caused by additive noise on the transmission channel, and which is applied to the received signal, and, in addition, has a channel estimation corrector (3), which is designed such that it corrects the signal from the channel estimator (1) taking into account the output signal from the estimator for the interference (2) which is caused by the additive noise on the transmission channel.

**Revendications**

1. Procédé d'estimation d'un canal de transmission doué de mémoire,
   **caractérisé en ce que**
   le procédé présente les étapes suivantes :

   (a) détermination d'une première estimation $\hat{h}$ de la réponse d'impulsion du canal de transmission,
   (b) estimation des parasites provoqués par le bruit additionnel du canal de transmission, et
   (c) correction de la première estimation de canal faite à l'étape (a) avec prise en compte de l'estimation faite à l'étape (b) des parasites produits par le bruit additionnel du canal de transmission.

2. Procédé selon la revendication 1,
   **caractérisé en ce que**
   la première estimation de canal $\hat{\underline{h}}$ est effectuée par un « filtre adapté ».

3. Procédé selon la revendication 2,
   **caractérisé en ce que**
   le filtre adapté est donné par la formule $\hat{\underline{h}} = 1/\gamma \cdot G^{\cdot T} \cdot e_{ref}$ dans laquelle

$$G = \begin{vmatrix} r_W & r_{W-1} & r_1 \\ r_{W+1} & r_W & r_2 \\ r_{W+N-1} & r_{W+N-2} & r_N \end{vmatrix}$$

$$\gamma = N/L \cdot \left\| \underline{r} \right\|^2$$

$\underline{r} = (r_1,...,r_L)$ est un signal de référence utilisé pour l'estimation du canal, $\underline{e}_{ref} = (e_{refstart},... \ e_{refstart+N-1})$ est la partie du signal de réception qui n'est pas influencée par les données émises avant et après le signal de référence,

   T est l'opérateur de transposition,
   N est un entier naturel pour la longueur du signal de réception,
   L est un entier naturel pour la période de la cadence de la puce.

4. Procédé selon la revendication 1,
   **caractérisé en ce que**
   la première estimation de canal à l'étape (a) est fournie par une estimation des moindres carrés.

5. Procédé selon la revendication 4
   **caractérisé en ce que**
   l'estimation des moindres carrés est donnée par la formule

$$\hat{\underline{h}} = \left( G^{\cdot T} - G \right)^{-1} \cdot G^{\cdot T} \cdot \underline{e}_{ref} \, .$$

6. Procédé selon une des revendications précédentes,
   **caractérisé en ce que**
   l'estimation des parasites à l'étape (b) est donnée par la formule

$$\sigma^2 = \theta \left( E - (1+f) \cdot \gamma \left\| \hat{\underline{h}} \right\|^2 \right) / N(1+f)$$

dans laquelle

   N est un entier naturel pour la longueur du signal de réception,
   f est la fréquence,
   $\gamma$ est un facteur de cadrage d'énergie,
   E est l'énergie.

7. Procédé selon une des revendications précédentes,
   **caractérisé en ce que**
   la correction d'estimation de canal $\hat{\underline{h}}_k$ de la composante d'ordre k

$$k \in \{1, ..., W$$

du vecteur estimé $\hat{\underline{h}}_k$ de la réponse d'impulsion de canal h à l'étape (c) est donnée par

$$\hat{\underline{h}}_k = \begin{cases} O, \text{ si } \hat{\underline{h}}_k{}^2 \prec \sigma^2/\gamma \\ h_k \text{ dans le cas contraire} \end{cases}$$

avec $\sigma^2$ représentant la variance et $\gamma$ un facteur de cadrage d'énergie.

**8.** Procédé selon une des revendications 1 à 6,
**caractérisé en ce que**
la correction d'estimation de canal $\hat{\underline{h}}_k$ de la composante d'ordre k,

$$k \in \{1, ..., W$$

du vecteur estimé $\hat{\underline{h}}_k$ de la réponse d'impulsion de canal h à l'étape (c) est donnée par

$$\hat{\underline{h}}'_k = \sqrt{\theta(\hat{\underline{h}}_k - \sigma^2/\gamma) - \hat{\underline{h}}_k /|\hat{\underline{h}}_k|}, \text{ si } \hat{\underline{h}}_k \neq O$$

et $\hat{\underline{h}}'_k = 0$ dans le cas contraire,
avec $\sigma^2$ représentant la variance et $\gamma$ un facteur de cadrage d'énergie avec

$$\theta(x) = \begin{cases} x, \text{ si } x \succ O \\ O, \text{ dans le cas contraire} \end{cases}$$

**9.** Procédé selon une des revendications 1 à 6,
**caractérisé en ce que**
la correction d'estimation de canal effectuée à l'étape (c) est donnée par l'algorithme POCS.

**10.** Procédé selon une des revendications 1 à 6,
**caractérisé en ce que**
la correction d'estimation de canal effectuée à l'étape (c) est donnée par l'algorithme MMSE.

**11.** Procédé selon la revendication 10,
**caractérisé en ce que**
l'algorithme MMSE est donné par la formule

$$\hat{\underline{h}} = \left(G^{\cdot T} \cdot G + \sigma^2 \cdot I\right)^{-1} \cdot G^{\cdot T} \cdot e_{ref}$$

dans laquelle I est la matrice unitaire,

$$G = \begin{vmatrix} r_W & r_{W-1} & r_1 \\ r_{W+1} & r_W & r_2 \\ r_{W+N-1} & r_{W+N-2} & r_N \end{vmatrix}$$

$\sigma^2$ la variance et

$\underline{e}_{ref} = (e_{refstart}, \ldots e_{refstart+N-1})$ est la partie du signal de réception qui n'est pas influencée par les données émises avant et après le signal de référence.

12. Dispositif pour la mise en oeuvre du procédé selon les revendications précédentes,
**caractérisé en ce que**
ce dispositif comprend un estimateur de canal (1) et un estimateur pour les parasites (2) provoqués par le bruit additionnel du canal de transmission, ces estimateurs agissant sur le signal de réception, ainsi qu'un correcteur d'estimation de canal (3) conçu de manière à corriger le signal de l'estimateur de canal (1), en prenant en compte le signal de sortie de l'estimateur des parasites (2) produits par le bruit additionnel du canal de transmission. :

Fig.1

Fig.2